# EUROPEAN PATENT SPECIFICATION

(11) **EP 2 930 621 B1**
(45) Date of publication and mention of the grant of the patent: **05.12.2018**
(21) Application number: 14164135.7
(22) Date of filing: 10.04.2014
(51) Int. Cl.: G06F 9/54, G06F 9/50, H04L 12/18

(54) **Network-based Render Services and Local Rendering for Collaborative Environments**
Netzwerkbasierte Render-Dienste und lokales Rendern für gemeinschaftliche Umgebungen
Services de rendu basés sur un réseau et rendu local pour des environnements collaboratifs

(43) Date of publication of application: 14.10.2015
(73) Proprietor: Crytek GmbH, 60322 Frankfurt am Main (DE)
(72) Inventor: Yerli, Faruk, 60322 Frankfurt/Main (DE); Taube, Alex, 61440 Oberursel (DE); Peters, Benjamin, 60332 Frankfurt/Main (DE)
(74) Representative: Schmidt, Steffen

(56) References cited:
- US-A1- 2011 010 455
- US-A1- 2012 154 389
- I. J Grimstead ET AL: "RAVE: the resource-aware visualization environment", Concurrency and Computation: Practice and Experience, vol. 21 25 March 2009 (2009-03-25), pages 415-448, XP055130882, DOI: 10.1002/cpe.1327 Retrieved from the Internet: URL:http://onlinelibrary.wiley.com/doi/10. 1002/cpe.1327/full [retrieved on 2014-07-21]
- "Pattern-Oriented Software Architecture - A System of Patterns, Architectural Patterns, Broker ED - Buschmann F; Meunier R; Rohnert H; Sommerlad P; Stal M", 30 June 2000 (2000-06-30), PATTERN-ORIENTED SOFTWARE ARCHITECTURE - A SYSTEM OF PATTERNS, JOHN WILEY & SONS, UK, PAGE(S) 99 - 122, XP002680542, ISBN: 0-471-95869-7 * page 117, line 14 - line 21 *

## Description

### TECHNICAL FIELD

The present disclosure generally relates to network-based render services and local rendering for collaborative environments and, in particular, to network-based systems and methods for providing access to collaborative environments. The present disclosure may generally relate to systems and methods providing collaborative environments enabling proactive stock management.

### BACKGROUND

Interaction with and visualization of complex data, such as massive data or big data related to multi-dimensional simulation results or describing complex business processes and data, such as in stock management, remain a difficult task, since handling of complex data could be restricted by processing resources and proprietary protocols and the visualization of the results could be limited by locally available processing and rendering hardware.

Current approaches directed at handling of simulation and business data from various sources typically require users, such as service stock managers, to access several applications and collect information and data in various ways, for example related to email, telephone, database independent digital files, and others, to gather all needed information. This wastes a lot of time just collecting information, instead of working on fixing issues related to the data. Furthermore, current approaches do not allow for a plurality of users working together on the complex data from different sources and simulating individual aspects of the data. For example, in stock management critical situations related to various information and data can come up anytime, as customers order whenever they need new supply, and issues need to be fixed by a team of managers sometimes in a very short amount of time, e.g. in the next hours.

I.J.Grimstead et al: "RAVE: The Resource-aware Visualization Environment" Concurrency and Computation: Practice and Experience, 2009, discloses a distributed, collaborative grid-enabled visualization environment that supports automated resource discovery across heterogeneous machines. Local display devices may render data sets remotely, depending on their capabilities and present load, utilizing remote servers. The visualization environment provides a data service and render service, which may perform rendering instead of local clients that do not have sufficient resources. Furthermore, active clients and thin clients are provided in the environment.

A broker architectural pattern enabling clients to directly communicate with servers is disclosed in "Pattern-oriented Software Architecture - A System of Patterns" by Buschmann F. et al, 2000. The broker may tell clients which communication channel the server provides and the clients can then establish a direct link to the requested server.

US 2011/010455A1 discloses an approach for dynamic computation allocation based on performance characteristics.

Therefore, it is an object of the present invention to provide an interactive, flexible and unified approach for collaborative processing, analysis and simulation of complex data.

### SUMMARY

The problem is solved by a system and a method for providing access to a collaborative environment, including a render service as defined in the independent claims. Furthermore, a computer-readable medium is defined. Preferred embodiments are defined in the corresponding dependent claims.

A first aspect of the present disclosure relates to a network-based system comprising a master server providing access to a collaborative environment and configured to dynamically manage a first group and a second group of client devices, the first group of client devices requesting a render service, one or more processing devices providing the render service configured to provide rendered representations of the collaborative environment to the first group of client devices, and one or more databases coupled to the one or more processing devices and configured to provide data for the collaborative environment to be processed by the processing devices. With respect to the client devices of the first group, the master server is configured to dynamically forward each client device of the first group to a respective processing device and to establish a direct connection between the respective processing device and the client device to provide a rendered representation of the collaborative environment to the client device via the direct connection. With respect to the client devices of the second group, the master server is configured to directly provide data indicative of the collaborative environment to each client device of the second group to be locally rendered on the client devices of the second group.

The system may be set-up to provide a structure of dedicated processing devices, which can be accessed by individual client devices in order to enable collaborative access to complex data from multiple sources within an environment. The system dynamically supports both, client devices of the first group that request a render service, such that the rendered output including the representation of the collaborative environment is provided via the direct connections to the client, and client devices of the second group that have sufficient resources to provide a local rendering of the collaborative environment.

The central master server dynamically manages the client devices and, if requested, assigns the client devices to the processing devices providing the render service. Further, the master server could be configured to operate as a proxy server in order to directly provide the data related to the collaborative environment for local rendering on the client devices of the second group. The master server may be a controlling unit for all connected client devices and may control the whole environment of the system, including the processing devices and the databases.

The processing devices, which could also be referred to as render servers throughout the description, can be controlled by the master server and may receive the client connections from the master server in response to an access request. As soon as a processing device accepts a forwarded client device, a direct connection between the processing device and the client device is established. The direct connection may be associated with the render service such that the render service may directly feed the rendered representation of the collaborative environment into the direct connection and trigger the direct connection for any data received from the client device. By establishing direct connections between the processing devices and the client devices of the first group on demand, the approach enables a fast and efficient communication between the processing devices and respective client devices, including direct transmission of the rendered output or representation of the collaborative environment.

The client devices may access the collaborative environment provided by the system by connecting to the master server and requesting access to the data stored in the one or more databases. Furthermore, the client devices may initially or at any later point in time indicate that a render service is requested or that the data will be rendered locally. Also, a client device of the first group assigned to a render service may request to leave the render service. In this case the client device may be redirected back to the master server and re-grouped into the second group in order to directly receive the data indicative of the collaborative environment for local rendering. This provides for an efficient access to the render services and the collaborative environment, since the client devices remain registered and connected to the master server and need not to establish a new connection with the master server.

The master server, the processing devices and the client devices may be implemented as hardware devices including processing units and memory or storage means, which may be configured to communicate with each other via a network. Furthermore, the databases may be provided as hardware devices including a processing unit and storage means dedicated to store, manage and retrieve massive data. For example, the one or more databases may be capable of storing big data related to experimental results or business data, which would be normally too large to be handled by a single storage and which would extend beyond the ability of commonly used tools to capture, manage and process the data within a tolerable elapsed time.

The system can be adapted to individual processing requirements of a plurality of client devices and the complex data stored in the databases. The system provides for a highly flexible and scalable approach enabling immediate processing of complex data and direct interaction with the complex data. In general, the system improves information access and communication which are key to a procative stock management and increase of productivity.

The term rendered output or rendered representation, as used throughout this description, refers to data output related to a representation of the collaborative environment intended for presentation in any suitable modality on the client devices of the first group, such as audio data, image/video data, haptics data, force feedback data, and others, as well as combinations thereof. Rendered output may be provided to a suitable output device on the client devices. For example, video data may be supplied to a display device via a graphics unit of the client device that receives rendered video data and generates respective control signals to control the display device. Similarly, audio data can be provided to speakers or another audio output device via an audio unit resulting in an acoustic presentation or display of the rendered data.

The processing devices may be configured to process data from the one or more databases and to generate rendered output of the collaborative environment including representations of at least some of the processed data. The processed data may include any kind of simulation results, for example resulting from a simulation of physical or chemical processes and/or complex business data. Using the direct access to the one or more databases, the system may also connect to a plurality of databases, wherein each database may store different data, such as data measured by different sensors or according to different modalities, or individual business-related data, such as stock data, business intelligence data or CRM (Customer Relationship Management) data, and other data. The processing devices could be configured to combine the data from the different sources and process the data in order to generate a representation of the processed data within the collaborative environment, which may be provided to the render service of the processing device in any suitable form, such as using low-level commands or instructions of a hardware-related programming interface or using high-level commands of an application programming interface of the render service, for example, by describing graphic primitives organized in a scene graph. Furthermore, the processing devices can be configured to provide data indicative of the collaborative environment including the processed data for local rendering on the client devices of the second group.

According to one embodiment, for each client device of the first group, the representation is individually rendered by the respective processing device. The representation may be defined by a viewing perspective on the collaborative environment, selected or filtered data in the collaborative environment, overlays and additional levels displayed in the collaborative environment and other factors and parameters of the collaborative environment which may be adjusted for a particular client device.

In yet another embodiment the master server further provides a communication interface interconnecting at least some of the client devices of the first and second groups. Users operating individual client devices can communicate with each other via in-build communication tools, for example text messages, voice chat, and others. Existing communication tools, e.g. MS lync or messenger, Google talk, or others can also be integrated for easier access.

In a further embodiment the directly provided data is processed by a respective processing device and forwarded via the master server to the client device. Accordingly dedicated processing devices may process data for the collaborative environment without rendering the data and may instead forward the data for local rendering of the collaborative environment to the client devices of the second group.

According to another embodiment the master server is further configured to manage access to selected data of the one or more databases based on permissions and/or rights of the client devices. All client devices may connect via the system to the same databases, however, the master server may grant individual users or respective client devices access to selected data he owns the rights to access. For example, certain users might have access only to certain customers or product data. Hence, the representation of the collaborative environment provided or the data indicative of the collaborative environment may be restricted to those data which can be accessed and the remaining data may be omitted in the representation or the indicative data according to respective permissions or rights.

In a preferred embodiment at least one representation of the collaborative environment includes a timeline representing a development of a plurality of items over time. The data of the databases may be processed and included into the collaborative environment as items or data items and arranged with regard to the timeline. Further simulations may be performed and arranged on the timeline

According to a preferred embodiment, the system further comprises at least one supervisor component configured to monitor operating conditions of the one or more processing devices. The supervisor component may be located as a dedicated hardware between the master server and the processing devices in order to observe the performance of the processing device, individual applications and/or tools executed on the processing device, and/or the render service continuously. In case of a problem, the supervisor component may interrupt, pause, cancel, restart or reinitiate processing of the render service or of the processing device, in which case the client device could quit the processing device and be redirected back to the master server. The supervisor component can be implemented as software, hardware or a combination thereof. The supervisor component may be a dedicated processing device or the supervisor component can be implemented as a software module on the master server or on a processing device and may be granted respective permissions to observe the render services provided by at least one processing device. The supervisor component may report to the master server a current state of the processing devices and receive instructions to handle the load balancing of the processing devices in order to achieve an optimal performance of the overall system.

In another embodiment, the processing devices are configured to receive input data from respective client devices via said direct connections. The processing devices may preferably update their processing of the data based on the received input data. Preferably, the input data are indicative of an update of the processed data of the collaborative environment. Hence, the application could modify and update the processed data and generate an updated output of the data, which is provided to the render service for immediate rendering. The input data may also relate to navigation within the representation of the complex data including, for example, adjusting a viewing perspective or a viewing point, highlighting individual representations of the data, updating parameters and aligning representations of the data and others. The actual input data and commands may be entered by the user either with a typical input device like a computer mouse, or in case of a touch device, directly by touch on screen, using gestures, tracking devices, and the like.

According to a further embodiment, the processed and/or updated data of the collaborative environment is stored in a temporary storage according to one or more versions and the processing devices are automatically redirected to at least one version of the processed data. Preferably, one of the client devices is configured to manage the versions of the processed data in the temporary storage and to commit a version of the processed data to a respective database. At least some processing devices may be configured to work on the same version of the data simultaneously, in order to provide rendered output to several users related to the same version or state of the data. A processing device may also be configured to accept connections from multiple client devices such that the same rendered output could be provided to the client devices. In order to prevent an immediate re-writing of the data back to the databases and to allow for simulation of processes based on the data, each processing device may include a temporary storage. Hence, the processing devices could work on local copies or versions of the processed data. A processing device accepting a plurality of connections from several client devices may also designate one or more of the client devices to take charge of the temporary storage. For example, one or more users operating respective client devices may be entitled to modify the processed data, while the remaining users operating the other client devices connected to the processing device(s) working on the same processed data may only be allowed to observe the current processing. Hence, one user or a limited number of users may be granted appropriate access rights to manage the temporary storage, which may, for example, include one or more of creating a copy of the currently processed data, modifying and accepting updates of the currently processed data of a version, and committing the new version of the processed data to the respective database or databases, after the modifications have been approved by one or more of the users with appropriate access rights. Accordingly, changes a certain user enters into the system may be stored as alternative data. This "proposal" to optimize the data may then be shared to other users for testing/approval. Further other users can apply additional changes to allow for a truly collaborative optimization. Hence, the approach allows for simulations of complex data, which can be controlled by a limited number of users and observed by a number of other users.

For stock management, the system preferably allows simulating certain changes before these are executed and stored on the actual databases. Based on typical forecast data and real order data a user can simulate for example the redistribution of product deliveries from one distribution center to another one.

According to another preferred embodiment, the system comprises a database interface coupled to the one or more processing devices and configured to provide unified access to the one or more databases. The database interface may be defined as an abstract layer in order to allow plug-and-play of databases using various kinds of standards and technologies. The database interface may be implemented on the master server or one of the processing devices. The database interface may be also implemented on one or more dedicated hardware devices, which may correspond to the number of attached databases and which may flexibly handle the respective requests. Load balancing may be used for the dedicated hardware devices to implement the database interface, similar to the load balancing of the individual processing devices. Hence, the system may be able to connect to different existing logical databases, such as databases storing stock data, business intelligence (BI) data and CRM data. Technically the system may be able to interface to different formats of databases, such as SAP HANA, Oracle, SQL, and others. More than one source can be combined. Preferably, data can be cached on the system internally to further increase the speed of accessing the data. The system may grant the users of the client devices access to several databases in parallel, including all databases the user needs for his tasks, e.g. a CRM database to access customer data, a BI database to access aggregated business data like KPI, and preferably access to all databases storing product stock supplies in various locations, like production plants, distribution centers and warehouses.

In a preferred embodiment, multiple client devices are connected to one processing device, each one of the client devices receiving the same rendered output or representation of the collaborative environment. Preferably, one of the client devices may initially connect, via the master server, to the application and may initiate processing of the data and respective rendering of the output using the direct connection. Subsequently, further client devices may access the processing device via the master server. The master server or the processing component may recognize that multiple client devices are connected and set up further direct connections to the other connected client devices, wherein the rendered output may be duplicated, broadcasted or otherwise copied, to provide the same rendered output to the client devices. The duplication of the rendered output may be done by the render service and passed to subsequent processing components managing the direct connections to the individual client devices. It is to be understood, that while multiple client devices may access one processing device, one client device may also be configured to access multiple processing devices, wherein the rendered output of the plurality of processing devices can be displayed in different parts of a display of the client device. For example, an operating system using windows can be used on the client and the rendered output can be directly displayed within a window.

In yet another preferred embodiment, multiple client devices are registered as participants of a video conference. The multiple client devices can register at the master server by submitting, along with an access request, an indication that they desire to enter a video conference. The processing device accessed by the client devices may be a dedicated processing device or may include an application for video conferencing and may register the multiple clients as participants of the video conference. Further to an initial authentication of the client devices at the master server, either the master server or the processing device or the dedicated application may include means to authenticate the individual users of the connecting client devices, which may include checking of permissions to access the video conference. The processing device or the video conference application may further include means to receive, via the direct connections, respective input of the individual users of the client devices and to broadcast the input, such as typed-in text or an audio/video stream of the respective user, to the other participants of the video conference, either as part of the rendered output or as additional output, which may be rendered by the render service as well and provided as a rendered stream to the client devices of the first group, or as further data directly provided to the client devices of the second group for local rendering.

In yet another embodiment, the master server is further configured to manage the one or more client devices of the first and second groups in response to control commands received from the one or more client devices. Further to the direct connections between the processing devices and the client devices of the first group, the client devices of the first group may maintain a connection to the master server in order to transmit control commands. Control commands may include management commands, requests to update a state of the processing device or an application running on the processing devices, commands indicative of a state and bandwidth of the direct connection, and other control commands. The master server may process the control commands and may take appropriate actions, such as managing the client devices, re-grouping the client devices from the first group to the second group and vice versa, load balancing, termination of individual applications, restart of individual applications, instructing the processing devices to adjust the processing with regard to an available bandwidth, and similar tasks. The master server may also forward the control commands to a supervisor component for further processing. Preferably, the control commands may include a request for a render service from a client device of the second group.

In yet another embodiment, the render service and/or the client devices of the second group include a real-time graphics engine configured to generate the rendered representation of the collaborative environment. A rendering engine, as used throughout this description, is a software and/or hardware framework capable of receiving an abstract representation of a scene including graphic elements, acoustic elements, and elements of any other modality, as well as definitions of conditions in the scene, such as light conditions. The rendering engine is capable of processing the information and delivering a highly realistic representation of the scene, including a highly realistic graphical visualization. The rendering engine may utilize a dedicated rendering hardware capable of computing a realistic appearance of the elements or individual objects taking into account surface characteristics, reflections, multiple light sources, ambient light, and other conditions. Preferably, the rendering engine is independent of any application or processing task and may process rendering requests from different applications. The rendering engine may be provided as hardware, software or a combination thereof. For example, the rendering engine may be implemented on a dedicated resource of the processing device including a driver. The rendering engine may be the CryEngine available from Crytek GmbH, Frankfurt am Main, Germany. The rendering engine may be configured to provide a rendering quality that is comparable to a best-looking, animated, photorealistic graphics available for real-time rendering for any application, such as games, business, television applications, and others. Hence, the generated rendered output may be completely independent of the available resources on the client device as long as the client device is capable of displaying the rendered output.

In a preferred embodiment, the rendered output includes a rendered video stream reflecting the representation of the collaborative environment. The processing devices may continuously provide a representation of the collaborative environment to the render service responsive to any input or processing results or any other internal state. The render service may immediately render the data, i.e. only within a short or almost unnoticeable time period, such as of less than 100 ms, preferably of less than 50 ms, and most preferably of less than 10 ms, and transmit the rendered output via the direct connection to the clients. Hence, the rendered video stream corresponds to an output of an application, which would be normally displayed on the local processing device. Hence, except for the latency of transmission or a possible compression of the video stream, the video stream cannot be distinguished from a local output.

In a preferred embodiment, the rendered video stream is variably encoded based on an available bandwidth of the direct connection. Either the master server, or the processing device, or the supervisor component can monitor the available bandwidth of the direct connection and may adjust several parameters of encoding of the rendered video stream, such as resolution, level of compression, frame rate, and other parameters. The rendered output may be generated by the render service independently of the bandwidth of the direct connection, and may be passed to a dedicated processing component, which may continuously receive indications of the current bandwidth and automatically perform encoding of the rendered output according to the indications.

In a further embodiment, the one or more processing devices are set up as a cluster controlled by the master server. The cluster may consist of a set of loosely connected or tightly connected computing devices that work together so that they can be viewed as a single system providing the render service. The components of the cluster may be connected to each other through a fast local area network, wherein each node of the network may correspond to a computing device. The cluster may also be set up as a grid or cloud, which is controlled by the master server and provides the services related to processing of the complex data.

According to another embodiment, at least some of the client devices of the first group are thin client devices. For example, the client devices of the first groups may be smartphones, tablets or laptops with limited rendering capabilities.

According to another aspect, a method for providing access to a collaborative environment is provided, comprising the steps of dynamically managing, by a master server, a first group and a second group of client devices, the first group of client devices requesting a render service, providing, by one or more processing devices, the render service configured to provide rendered representations of the collaborative environment to the first group of client devices, and providing data for the collaborative environment from one or more databases coupled to the one or more processing devices, said data to be processed by the processing devices. Regarding the first group of client devices, the master server dynamically forwards each client device of the first group to a respective processing device and establishes a direct connection between the respective processing device and the client device to provide a rendered representation of the collaborative environment to the client device via the direct connection. Regarding the second group of client devices, the master server directly provides data indicative of the collaborative environment to each client device of the second group to be locally rendered on the client devices of the second group.

The method according to the present disclosure allows users, such as service stock managers, operating various client devices to access data from several separate databases at once, to view this data in a combined way in the collaborative environment, preferably to simulate possible optimizations and to forward the changes to other users, who may then execute the changes. In detail, the users can have a uniform look on a situation defined by the data, such as product production, product supply, product transportation, and/or product orders, and others. The approach allows for highly accelerated information gathering and gaining of new information due to the fact that information is set in a new context. Preferably, more than one user can access the network-based system and the simulated optimizations to communicate faster and in a uniform way via the system and method according to the present disclosure.

In one embodiment the method further comprises individually rendering the representation for each client device of the first group, by the respective processing device.

According to another embodiment the method further comprises providing a communication interface interconnecting at least some of the client devices of the first and second groups.

In yet another embodiment the method further comprises processing the directly provided data by a respective processing device and forwarding the processed data via the master server to the client device.

According to one embodiment the method further comprises managing access to selected data of the one or more databases based on permissions and/or rights of the client devices.

In another embodiment of the method at least one representation of the collaborative environment includes a timeline representing a development of a plurality of items over time.

According to another embodiment the method further comprises monitoring, by at least one supervisor component, operating conditions of the one or more processing devices.

According to yet another embodiment the method further comprises receiving, by the processing devices, input data from respective client devices via said direct connections.

In one embodiment of the method the input data are indicative of an update of the data of the collaborative environment.

According to another embodiment the method further comprises storing the updated data in a temporary storage according to one or more versions, and automatically redirecting the processing devices to at least one version of the processed data.

In yet another embodiment the method further comprises managing by one of the client devices the versions of the updated data in the temporary storage, and committing by the client device a version of the processed data to a respective database.

According to one embodiment the method further comprises providing a unified access to the one or more databases using database interface.

In another embodiment the method further comprises providing the same rendered representation of the collaborative environment to multiple client devices connected to one processing device.

According to yet another embodiment the method further comprises registering multiple client devices as participants of a video conference.

According to another embodiment the method further comprises managing, by the master server, the one or more client devices in response to control commands received from the one or more client devices. Preferably, the control commands include a request for a render service from a client device of the second group.

According to yet another embodiment the method further comprises generating the rendered representation of the collaborative environment by means of a real-time graphics engine.

In a further embodiment the method further comprises further comprising rendering a video stream reflecting the representation of the collaborative environment into the rendered output.

In another embodiment the method further comprises variably encoding the rendered video stream based on an available bandwidth of the direct connection.

According to one embodiment the method further comprises setting up the one or more processing devices as a cluster controlled by the master server.

According to a further aspect, a computer-readable medium is provided, such as a non-tangible computer-readable medium, said computer-readable medium having instructions stored thereon, wherein said instructions, when executed by a computing device, cause said computing device to automatically perform a method according to embodiments of the present disclosure. In particular, the computing device may automatically perform a method for providing access to a collaborative environment, comprising the steps of dynamically managing, by a master server, a first group and a second group of client devices, the first group of client devices requesting a render service, providing, by one or more processing devices, the render service configured to provide rendered representations of the collaborative environment to the first group of client devices, and providing data for the collaborative environment from one or more databases coupled to the one or more processing devices, said data to be processed by the processing devices. Regarding the first group of client devices, the master server dynamically forwards each client device of the first group to a respective processing device and establishes a direct connection between the respective processing device and the client device to provide a rendered representation of the collaborative environment to the client device via the direct connection. Regarding the second group of client devices, the master server directly provides data indicative of the collaborative environment to each client device of the second group to be locally rendered on the client devices of the second group.

The disclosure provides a network-based system and a method which allow for representation of highly complex data, such as experimental results and results of physical and/or chemical simulations, as well as administrative data related to business and administrative entities in a collaborative environment, preferably enabling proactive stock management. The access to the complex data and processing of the data is dynamically mediated by the master server in order to enable direct access to the data of the collaborative environment that are to be rendered locally or provided as a rendered representation using a network-based render service, thereby providing instantaneous processing results of a high quality even for thin clients. Hence, the approach is highly flexible with regard to various types of client devices, various formats of databases storing complex and large data sets, and a direct communication between the client devices accessing the collaborative environment.

### DESCRIPTION OF THE DRAWINGS

The specific features, aspects and advantages of the present disclosure will be better understood with regard to the following description and accompanying drawings where:
- Fig. 1: shows a schematic diagram of a system according to one embodiment of the present disclosure; and
- Figs. 2 to 12: show various aspects of collaborative environments according to embodiments of the present disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

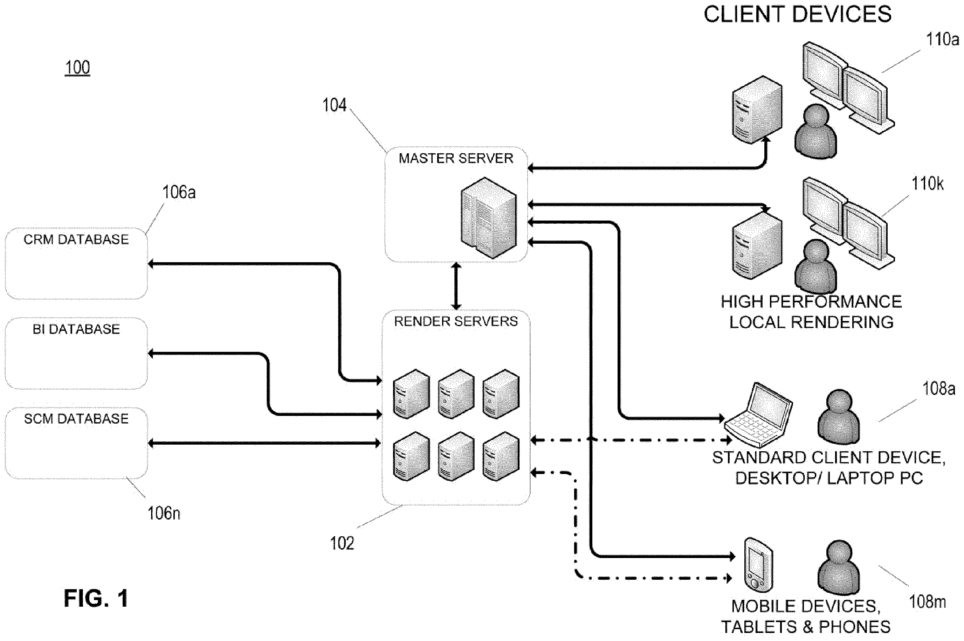

Fig. 1 shows a schematic overview of a system according to one embodiment of the present disclosure. The system 100 may include one or more processing devices, labelled as "render servers" in Fig. 1, which could be set up as a cluster or grid 102 that could be controlled by a master server 104. Each processing device may be configured to execute at least one application and host a render service, wherein the render service is configured to render output of the executed applications.

The system 100 further includes a plurality of databases 106a, ..., 106n, which are each coupled to the grid 102 of render servers and provide data to be processed by the applications executed on the individual render servers.

The system 100 further includes a plurality of client devices 108a, ..., 108m of a first group and client devices 110a, ..., 110k of a second group, which are connected to the master server 104 using persistent connections 104, as indicated by solid lines. The master server 104 may manage the plurality of client devices 108a, ..., 108m and 110a, ..., 110k. The client devices 108a, ..., 108m of the first group may send access requests to the master server 104 that indicate a render service provided by the grid 102. The master server 104 may check the access request, identify a render server and forward the client to the respective render server in the grid 102. The render servers of the grid 102 may be controlled by the master server 104 and may receive the connection requests from the client devices 108a, ..., 108m via the master server 104. As soon as a request is accepted, the master server 104 could instruct the render server to establish a direct connection to the respective client device according to instructions from the master server 104 or a direct negotiation between the render server and the client device. This connection could be a temporal connection, as indicated by the dotted line between the grid 102 and the client devices 108a, ..., 108m, and could be established for the duration of the interaction between the application and the respective client device. The direct connection can be used to provide the rendered output of the application from the rendered server to the client device and to receive input data from the client device. In order to improve the transmission of data, the direct connection may be assigned to the render service and the application.

Furthermore, the client devices 110a, ..., 110k of the second group may send access requests for the collaborative environment to the master server 104 and may further indicate that rendering will be done locally on the client devices 110a, ..., 110k. The master server 104 may serve as a proxy server to provide access to the collaborative environment and the complex data from the various sources and may provide the data indicative of the collaborative environment directly to the client devices 110a, ..., 110k for local rendering of the collaborative environment.

The master server 104 may handle all incoming "first time" access requests from individual client devices 108, ..., 108m and 110a, ..., 110k and may manage a pool of connected client devices. Each processing device may process, via a respective application, data and output for more than one client device 108a, ..., 108m, depending on its processing resources and power. For example, processing devices may be equipped with n graphics cards, wherein each graphics card could handle rendering for m clients. Accordingly, the processing device could handle rendering of output for n*m clients simultaneously. Hence, a configuration of the render servers in the grid 102 can be selected, in order to represent the desired or expected load of the system 100.

After initialization, a render server could connect directly with the client device and with the one or more databases 106a, ..., 106n to retrieve needed data sets and start processing the retrieved data. The user operating the client device may perceive the rendered output as a running application on the local client device. All input actions of the user related to the rendered output may be transferred back to the application and will be executed and handled there. In turn, an updated rendered output will be transferred back to the client device via the direct connection, and so on.

The client devices 108a, ..., 108m and 110a, ..., 110k may be implemented as hardware, software or combinations thereof, for example, as client device hardware. The client may be capable of connecting to a network, such as the Internet or any other communications network, over any kind of carrier and using any kind of protocol, and could also indicate to the master server 104 a preference for a network to establish the direct connection. Hence, the direct connection could be established using the same network or a different network. As shown in Fig. 1, the client devices 108a, ..., 108m may be any kind of device capable of connecting to a network in order to establish the temporal and persistent connections via one or more networks, displaying the rendered output, such as an audio/video stream, and sending control commands back to the master server 104 and to the render servers. The client devices 108a, ..., 108m may include any kind of processing device, such as tablets, smartphones, laptops, netbooks or desktop PCs, and any other suitable handheld or stationary processing device.

Preferably, the setup of hardware of the client devices 110a, ..., 110k may be a desktop machine and two 32inch touchscreen monitors. The monitors may give the user sufficient screen space to view many objects and a wide timeline on a combined screen resolution of, for example, 3840 x 1020 pixels. The desktop machine may be capable of running a local copy of the render service that connects to the master server.

The client devices 108a, ..., 108m and 110a, ...110k may be any standard PCs or mobile devices compatible with Windows 8.0+, Android, iOS or Blackberry.

The client devices 108a, ..., 108mand 110a, ..., 110k may comprise input means and/or display means, said input means adapted to provide user input and/or said display means adapted to display rendered output. The input means may comprise one or more of a keyboard, a pointing device, such as a mouse ball, track ball, joystick, touch screen or touch pad, microphones, video cameras and other sensors and trackers suitable to monitor and process input gestures of a user. For example, the video cameras may be configured to track facial expressions of the user and based on the recognized facial expressions may generate corresponding user input data. Likewise, microphones may receive audio signals corresponding to spoken words, may recognize a command based on the audio signals and generate user input data indicating the recognized command. The output means may comprise a projector, a display device, a stereoscopic display device, speakers, vibration devices, false feedback devices, and other output units suitable to represent rendered data in one or more modalities.

Preferably, the system 100 may be set-up as including five main segments. First, the databases 106a, ..., 106n, which can be of different type, interface and hardware. Second, the master server 104 that connects and controls all access and traffic through the system 100. Third, the render service, a cluster or grid 102 of high-end render servers that handle the application for the "thin clients" 108a, ..., 108m. Fourth, the thin clients 108a, ..., 108m that receive a video stream from the render servers. Fifth, the high-end client devices 110a, ..., 110k that can run the service like a render service in as a local copy - these may receive the data via the master server 104 instead of a video stream.

During processing, the render servers may retrieve data from the one or more databases 106a, ... 106n, process the data, and generate respective output, which may be thereafter transferred to the render service of the render server and provided to the respective client device via the direct connection. The data may include complex data of a large size, distributed over the one or more databases 106a, ..., 106n, such as experimental results from physical or chemical experiments or business-related data such as CRM (Customer Relationship Management), SCM (Supply Chain Management), HR (Human Resources), TPM (Trade Promotion Management) data. The databases 106a, ..., 106n represent examples of attached databases, to which the grid 102 of render servers is connected to. It is to be understood that the system 100 is highly flexible in connecting databases to the grid 102 and is, therefore, not dependent on a particular architecture of databases.

The system 100 may also include a supervisor component, also called a "grid supervisor" (not shown), which may be located between the master server 104 and the grid 102 of render servers to observe the render server's performance continuously. In case of any problem, the supervisor component may cancel processing of a render server and move it to a different render server of the grid 102, for example, in order to achieve a better balance.

The system 100 operates according to a system workflow, wherein the master server 104 handles all incoming "first time" access requests from the client devices 108a, ..., 108m. The master server 104 handles load balancing of the grid 102 of render servers to guarantee an optimal performance. The system 100 can manage several render servers in parallel, working independently from each other. These render servers may further exchange data via the master server 104 or local communication means between the render servers of the grid 102. Furthermore, the grid supervisor may directly control the render servers and the provided render service within the grid 102.

The render service of the render servers in the grid 102 may send a video stream to the client devices 108a, ..., 108m, independent of the individual features and resources of the client devices 108a, ..., 108m or may dynamically switch to local rendering, thereby re-grouping a client device 108a, ..., 108m as a client device 110a, ..., 110k. Hence, the user experience may be always the same, no matter what client device hardware the user is using.

As long as the requirements of the render service of the system 100 are met, the performance of the processing and rendering of the applications will always be the same, excluding bandwidth variations of the direct connections, which may depend on the location and situation of the user operating the client device, which may, however, be handled by corresponding screen encoding, which may be variably adjusted to the available bandwidth.

Editing of any data displayed on one client device will result in a transfer of said data back to the render server. Based on the configuration of the render server and the access rights of the client devices, the render server may directly transfer the edited data back to the database 106a, ..., 106n. The edited data may directly lead to an update of the processed data, which will be again immediately transferred back to the new client devices and displayed on respective output means. For example, any relevant data, such as key experimental results or accompanying profit may be directly transferred back to the client device and displayed thereon. However, actual data is only transferred between the database 106a, ..., 106n and the render servers in the grid 102. The actual rendering may be completely done by the render service on the render servers or locally on client devices 110a, ..., 110k, thus the performance is always stable. By using the grid supervisor, the system 100 can automatically detect render servers, which require more resources and balance the load on the individual render servers of the grid 102.

The system 100 may also allow for simulating certain changes and variations before these are executed and stored in the actual databases 106a, ..., 106n. For example, based on typical forecast data, a user operating a client device 108a, ..., 108m or 110a, ..., 110k can proactively manage stock data and simulate various parameters. Similarly, simulation parameters can be adjusted to typical scenarios. As soon as the user operating the client device is satisfied with a result, he can store the data according to the simulation in the database 106a, ..., 106n for later use and execution. Inside the system 100 and respective applications, the user operating the client device can test different variations to see a simulated result.

The system 100 can handle several accesses to different databases 106a, ... 106n simultaneously to add a real benefit to the user. Hence, the applications can access any kind of databases 106a, ..., 106n and switching between different applications or even systems dedicated to particular databases is not necessary for the user. Furthermore, the user can directly access different data from different databases and merge the data in order to allow for a better (and faster) overview of a current state or situation represented by the data. For example, the system 100 can connect in parallel to a CRM database, a stock management database and a business intelligence database. All tree sources may grant the user a combined view onto a certain order situation of a specific customer, viewing the customer's data and also seeing the impact of the orders to the profit changes. The databases may also reflect experimental data derived from a variety of sensors involved in measuring physical entities during a physical or chemical experiment, such as provided by a particle collider.

Due to providing the render service online in the grid 102 of render servers, the render servers can be connected to a powerful graphics engine in order to generate superior data visualizations, such as the CryEngine and the rendered quality may be comparable to the best-looking, animated, photorealistic graphics available for real-time rendering for any application, be it games, business, television and others. As already discussed above, any other suitable modality can be rendered in order to generate a rich experience of the processed data.

The system 100 may support multiple client devices 108a, ..., 108m and 110a, ..., 110k connecting to the same database data via the same application executed on a render server of the grid 102. Hence, the client devices may receive individual roles, such as a "presenter", "spectator" or "listener", in order to define access rights of the users for the processed data. Hence, one user can modify the processed data and present the updates to all other connected client devices. This may, for example, allow for a remote collaboration of a group of users. Obviously, the same data can also be modified by more than one user and the application could manage the collaborative updates, which could be, for example, timely separated.

According to one example, a "presenter" could connect his client device to a render server and the client device may receive data via the render service based on the processed data from one or more of the databases 106a, ..., 106n or process the data locally. The presenter could change the data, which could be thereafter directly transferred back to the database. Other users may be defined as pure "spectators", i.e. they may have no rights to modify any data, and receive the exact same video stream as the presenter. Since the spectators do not have permissions to modify the processed data, they are not directly connected to the database via the application and may only perceive the output of the render service on their client devices.

According to a further example, which could be referred to as a collaboration mode, multiple users may have their own connections to the databases. All users may see the changes of the data made by other users immediately and will also receive their own changes. Each client device of a collaborative user may be connected, via the master server 104, to the database. Hence, every collaborative user may also be a "presenter". Hence, a session of client devices can have multiple "presenters", and each presenter can have multiple "spectators" or "viewers".

The system 100 may connect to the actual databases 106a, ..., 106n via protocol interfaces. Through the protocol interfaces, any standard or custom-made database can be attached to the grid 102 of render servers without changing the actual application logic.

The render service may be implemented as a software module or as a hardware component on the processing devices of the grid 102. The render service may receive the output of one or more applications simulating the collaborative environment. For example, the applications may associate graphic elements with individual processing results and provide the graphic elements as output to the render service. The render service may process the output and generate a rendered stream. Since the rendering is done online, the client devices 108a, ..., 108m need not to include any dedicated rendering hardware or software in order to further process the rendered output. Rather, the client devices 108a, ..., 108m may be configured to receive and display streams on suitable output means. The online render service can provide one or more of audio streams, image/video streams and streams for other modalities or combinations of modalities, such as audio, image/video, haptics feedback, force feedback, olfactory feedback, gustatory feedback, and combinations thereof. For example, the online render service may provide two streams, a video stream and an audio stream that are provided to the client device and output on a display and on speakers, respectively.

The graphic elements of the output of the application may be arranged in a scene graph. A scene graph, as used throughout this description, is a general data structure that arranges representations of entities in a graphical scene. The scene graph may include a collection of nodes associated with the representations of the entities and arranged as a directed graph or tree, wherein each node may have children nodes and a parent node. Typically, nodes without children nodes are called leaf nodes and nodes having one or more children nodes are referred to as group nodes. Leaf nodes may reference objects, sprites, sounds, light, or anything that could be considered as rendered. Typically, an operation performed on a parent node automatically propagates to its children nodes and eventually to the leaf nodes. Each node of the scene graph may include further parameters, such as a transformation matrix, which are applied during processing of the node. For example, the transformation matrix may define a local transformation of the node with respect to the parent node.

The graphic elements may include one or more geometric primitives or shapes, such as spheres, cylinders, tubes or boxes, toroids, pyramids, triangular meshes, point clouds, and others. The type of geometric primitive may be directly determined by the type of the data of the associated data set. For example, a data set may include a sequence of numerical values, such as results from a sequential experiment or business data, such as key performance indicators (KPIs), which may be represented by cylinders or respective boxes stacked on top of each other, wherein a dimension of the graphic element may correspond to the respective numerical value of the data.

The rendered output may also include a representation of one or more interactive elements and the application may be configured to receive user input related to an interaction with at least one of the interactive elements. The interactive elements may include one or more of a slider, a scrollbar, a button, a representation of a position and/or orientation of a pointing device, a highlighting element, such as a bounding box indicating graphic elements that can be selected, and other suitable interactive elements. A user may activate an interactive element with a suitable input device of the client device. The respective user input data may specify the interactive element and the selected graphic element. For example, the user may interact with a slide bar to select different viewing perspectives on the processed data. In turn, the application may update the viewing perspective on the scene graph responsive to the user input and provide updated rendered data in accordance with the chosen perspective.

The system 100 may retrieve large and complex data on demand from a variety of data sources and render the retrieved data via the render service as an abstracted multi-dimensional environment, such as a three-dimensional (3D) or four-dimensional animated environments. As used throughout this description, an interactive simulation environment may refer to a virtual reality environment, an augmented reality environment, and a mixed reality environment. Virtual reality refers to computer-simulated environments, which provide a realistic and interactive three-dimensional representation of a computer-generated virtual world or scene. Augmented reality may refer to environments, which provide an interactive representation of a physical, real-world environment. Both elements are augmented by computer-generated or computer-simulated virtual elements, which are integrated into the real-world environment in a realistic fashion. For example, the virtual elements may be placed at a same position and with a same orientation as the elements of the real world, thereby superimposing and following the real elements. The virtual elements may also be simulated to behave according to physical rules in the real world. Mixed reality may refer to a combination of virtual reality concepts and augmented reality concepts, wherein virtual scenes are mixed with augmented scenes. Mixed reality refers to matching of real and virtual worlds to produce new environments where real and virtual elements co-exist and interact in real time. Use of virtual reality, augmented reality, and/or mixed reality enables a realistic, intuitive and direct perception of large and complex data sets and enables deep insights into the structure of the data.

The claimed subject matter, in particular the system workflow, as well as respective applications and the rendering service, may be implemented using object-oriented programming techniques. For example, each component or interface of the system 100 and each processing step of the method according to embodiments of the present disclosure can be an object of a software module. Object-oriented programming utilizes units of software called "objects", which encapsulate both data and functionality. Objects according to object-oriented programming represent software entities comprising data structures and operations on the data. This structure enables objects to model any real-world entity in terms of its characteristics represented by state elements, and its behavior represented by its functions. In this way, objects can model real things and abstract concepts like mathematical functions or geometrical computations. The applications executed on the render servers of the grid 102 may be defined as objects, reflecting the data from the databases and the desired processing functionality of a service. The render service provided by the render servers as well as the graphics engine or at least parts thereof can be implemented using object-oriented programming techniques.

As used throughout this description, the terms "component", "interface", and "system" are intended to refer to a computer-related entity, either hardware, firmware, a combination of hardware and software or executed software. A component can be, but is not limited to a computer, a process running on a processor, a processor, an object, an executable, a thread, and/or a program. By way of illustration, both an application running on a processing device and the processing device can be a component.

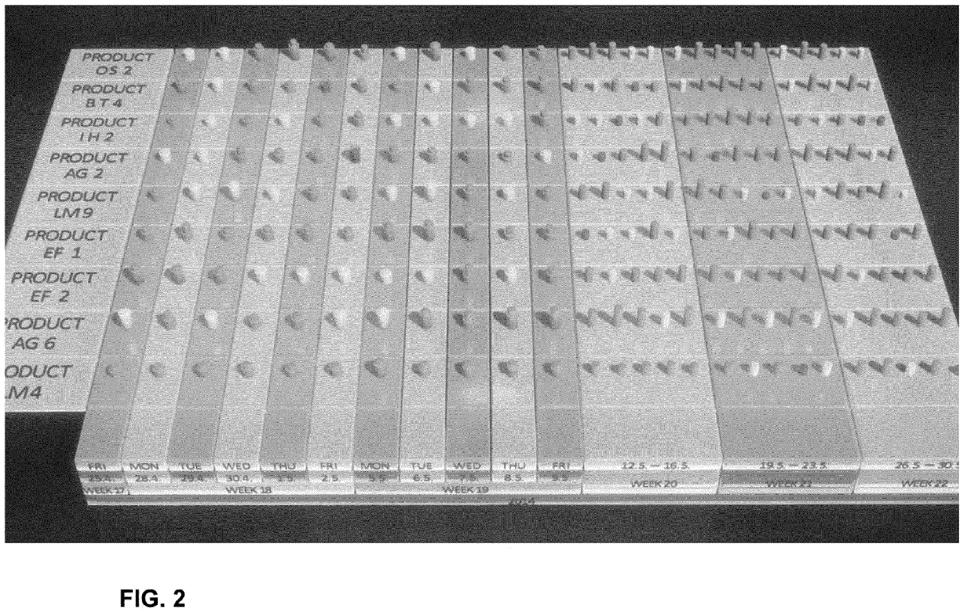

Figures 2 to 12 show various aspects of collaborative environments according to embodiments of the present disclosure. As shown, the users can use an intuitive interface to navigate freely through the representation of the collaborative environment, e.g. the data "landscape".

A so called deep dive can be performed on any data or data item as long as more detailed information is existing in order to retrieve more detailed information on selected items. The data and respective information may be displayed in various dimensions, usually in the three spatial dimensions, in time, color/ material, and possibly more. This way information on screen is separated into different patterns or items, which allows for an easier focusing, e.g. the user can fade out certain information faster and thus reduces the amount of information perceived and accelerating the navigation and general operation.

Preferably, a timeline may list future days and weeks in one dimension, such as on a horizontal axis, and the products represented by items in another dimension, such as a vertical axis. For each day and product certain information may be presented, i.e. units in stock, ordered stock, etc. These data may be usually displayed as 3D objects with a height corresponding to a value of the data. A color scheme may be used in the representation of the collaborative environment, which may follow a code, where main alert colors, such as green, yellow and red, may be used for status messages. For example, green may stand for "everything is fine", yellow for "be aware of potential risk" and red for "immediate attention needed - critical situation". All other colors may be used for indexing different information. For example, standard orders may be blue, different groups may be colored in grey tones, etc. Another layer of information may be displayed through animated objects. For example, a certain product may have an envelope flying around it to show that a colleague attached a message / email to the product to inform the user of certain news.

Navigation in the collaborative environment may be seamlessly in order to allow an optimal orientation of the user, e.g. as the user moves around in the data landscape, he may always keep a sense of spatial positioning compared to a rather abstract switch between old-fashioned pages, masks or even independent applications.

Figure 2 illustrates a timeline overview in a representation of a collaborative environment provided according to embodiments of the present disclosure. The overview gives at one glance the most important information about the products and their delivery status, in this case the delivery amount in context with the order amount. The different constellations may be color-coded, e.g. more delivery than orders in green, just enough delivery in yellow, and not enough delivery to fulfill all orders in red.

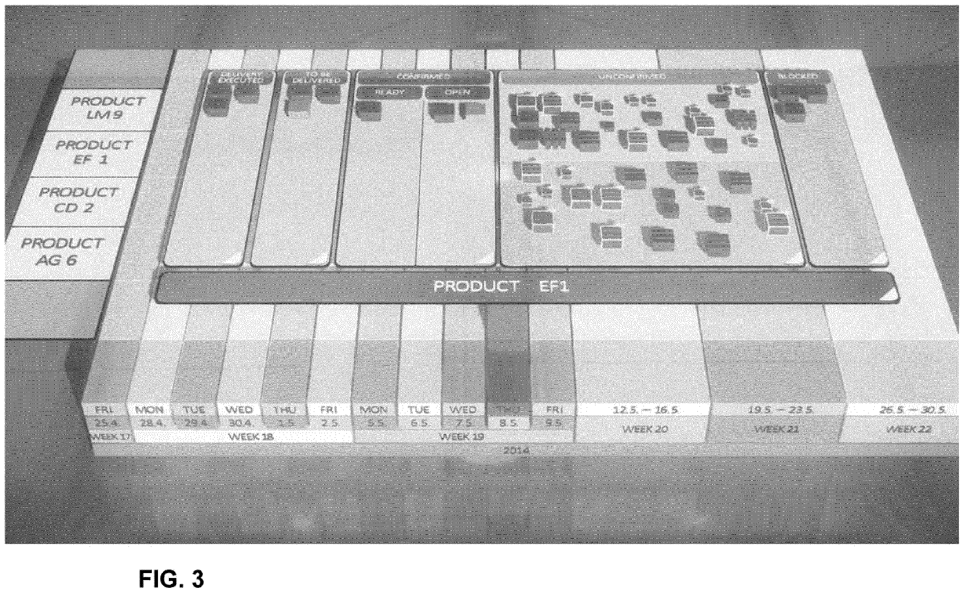

Figure 3 shows a render image of order details for one product on one day in a representation of a collaborative environment provided according to embodiments of the present disclosure. The render image shows the order surface (floating on top of the timeline), giving an overview of all orders of one product that are handled by one distribution center. The user sees at one glance where the orders are: ready to get delivered, still in process as blocked, unconfirmed or confirmed. The user can change the state by dragging and dropping the order object into a different area.

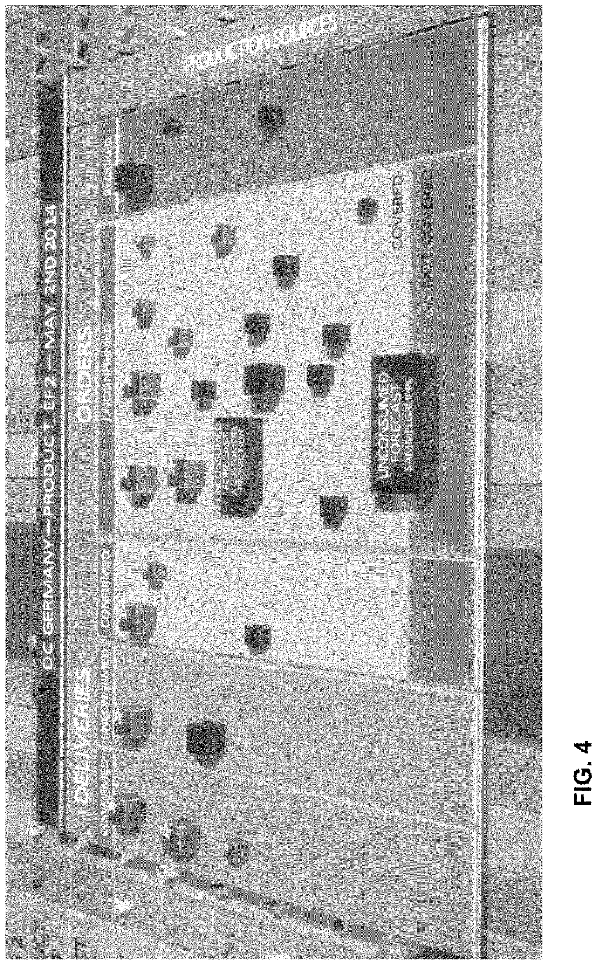

Figure 4 further shows an overview of orders in a representation of a collaborative environment provided according to embodiments of the present disclosure. Similar to Fig. 3 the order surface may be extended with an overview of the product orders from all customers that need to be fulfilled at the specific date. The orders are sorted into deliveries, such as actually on their way or waiting to be shipped, orders, such as order arrived, but not yet ready to be shipped or waiting to be confirmed, and blocked orders, such as certain approvals missing, e.g. payment missing, order details wrong, etc. Each box may represent an icon for one order. Some orders may be highlighted, for example a yellow border, a star, etc. to show important attributes of these orders. A surface color of the overview may give more information on the supply situation.

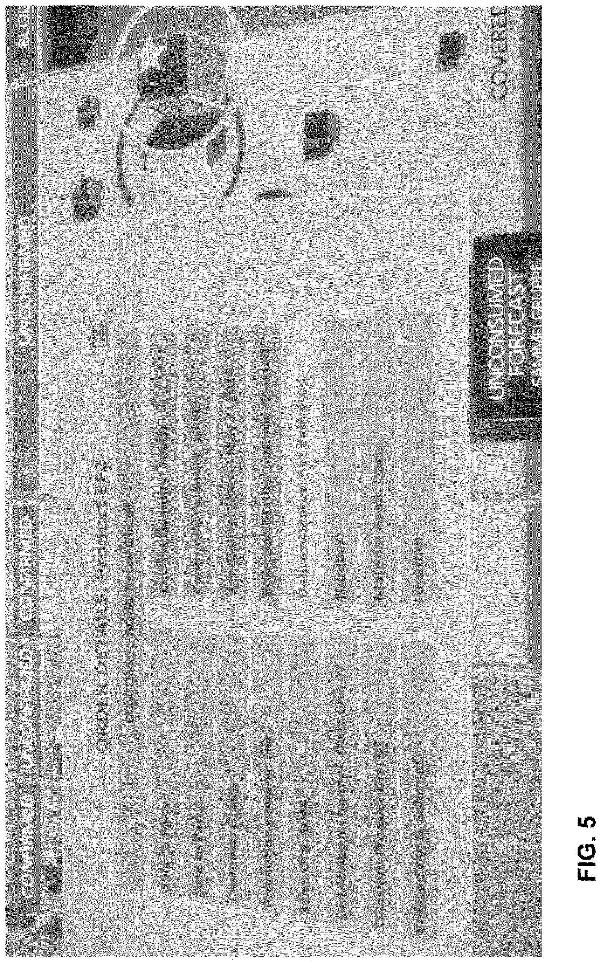

Figure 5 shows single order details in a representation of a collaborative environment provided according to embodiments of the present disclosure. When expanding more information on one order a 3D data sheet may open up giving detailed information on the actual order, e.g. ordered volume, price, client, etc.

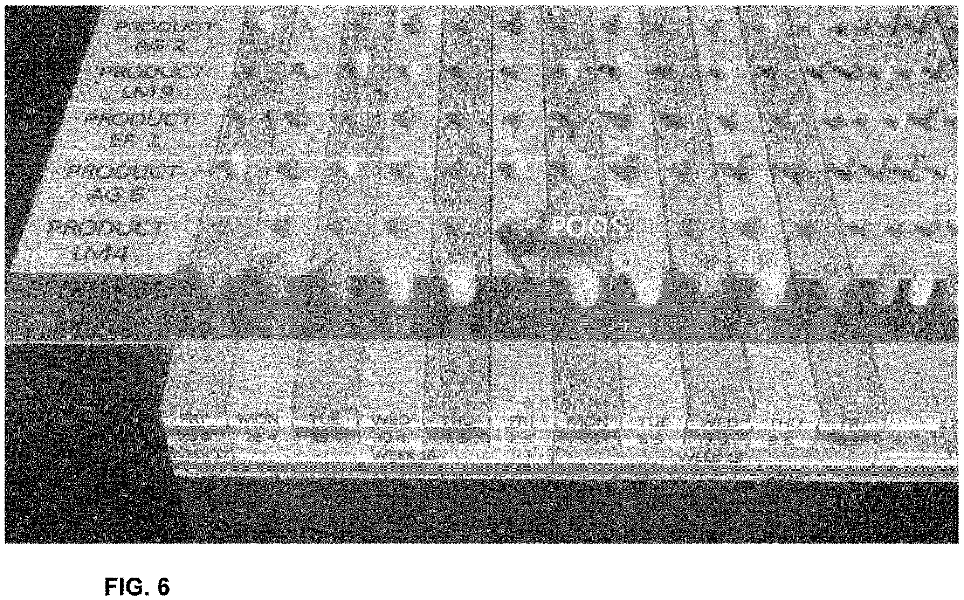

Figure 6 illustrates an alert situation in a representation of a collaborative environment provided according to embodiments of the present disclosure. In case certain values fall below or above a defined threshold, the system may generate an alert, visible in the timeline at the corresponding position. For example, Fig. 5 shows an alert where the available amount of goods is insufficient for the total of customer orders. This may happen for a certain day at which position a red flag may be raised, giving a short description of the alert, such as "POOS" (projected out of stock).

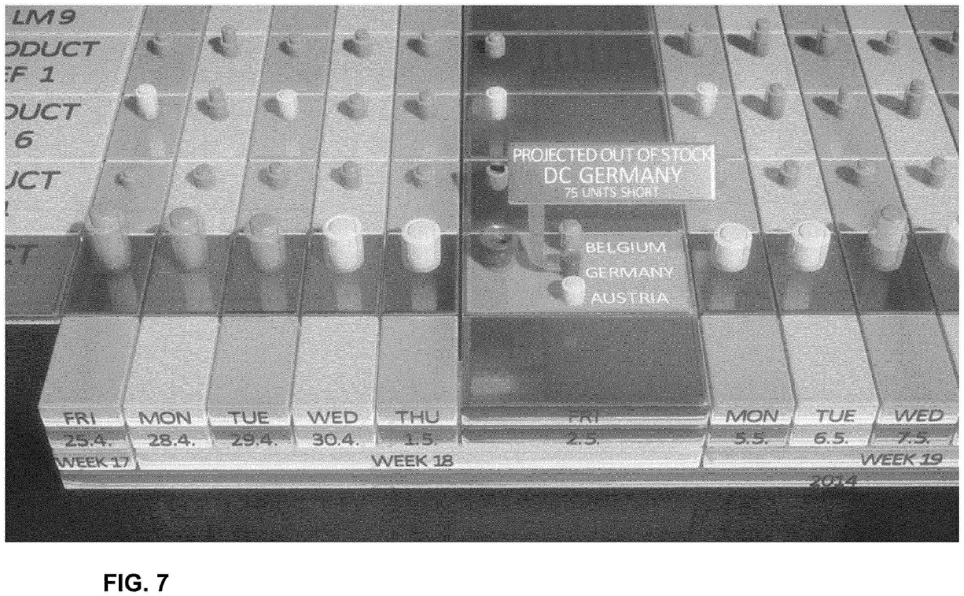

Figure 7 shows more detailed information on an alert situation in a representation of a collaborative environment provided according to embodiments of the present disclosure. By clicking on the alert situation more information may be displayed. For example the "POOS" alert in Fig. 5 may be opened and reveal that one certain distribution center has insufficient supply.

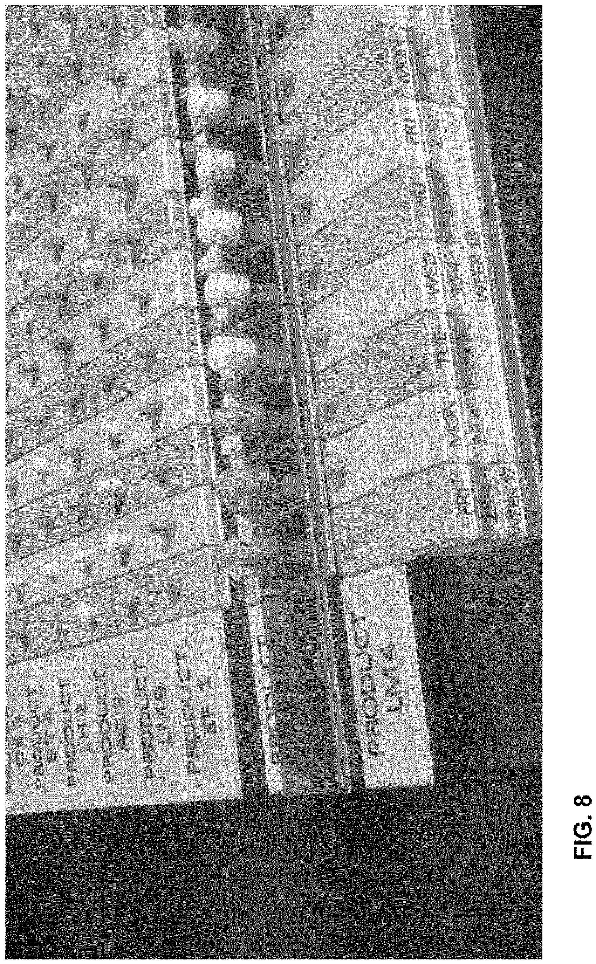

Figure 8 shows moving a product line in a representation of a collaborative environment provided according to embodiments of the present disclosure. For better view single products or groups can be rearranged. The user can drag and drop entire rows to rearrange them. The system may also allow an automatic sorting and filtering.

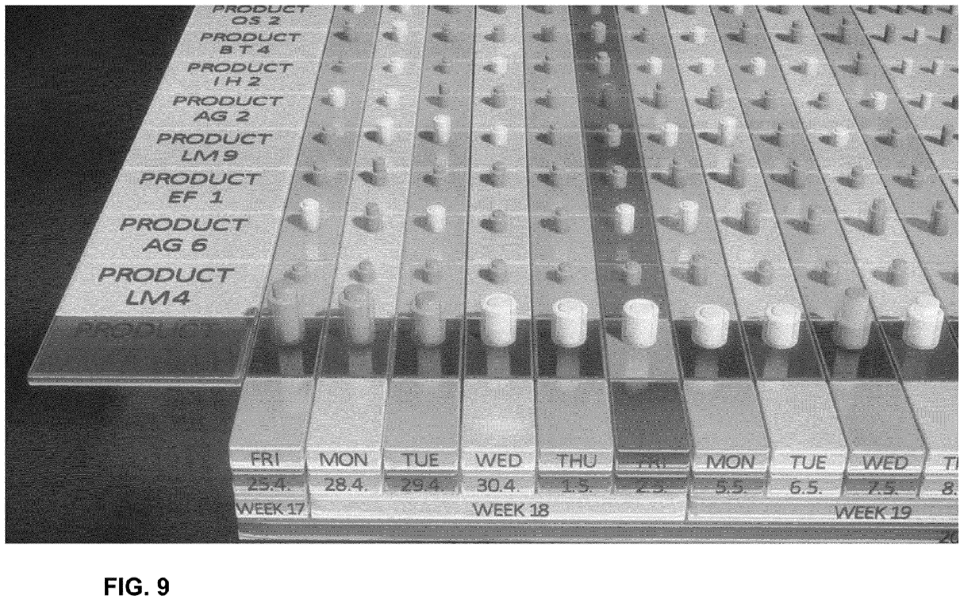

Figure 9 illustrates selecting one product at one day in a representation of a collaborative environment provided according to embodiments of the present disclosure. The user can click (touch where possible) on one product and day to select this for further operations.

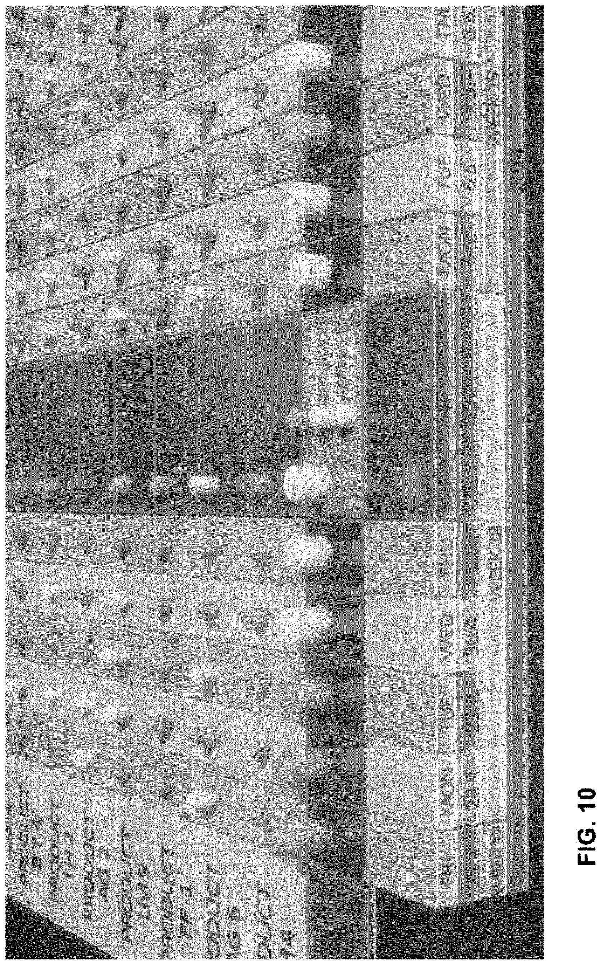

Figure 10 shows a quick info on all distribution centers in a representation of a collaborative environment provided according to embodiments of the present disclosure. Following Fig. 9, the user can open up more information to split a single KPI (key performance indicators) into separated KPIs for each available distribution center. As long as no alert is present, the aggregated KPI may show an average of the underlying KPIs. If an alert is present, the alert may have a higher priority and may be visualized instead of the average (per option both values can be displayed).

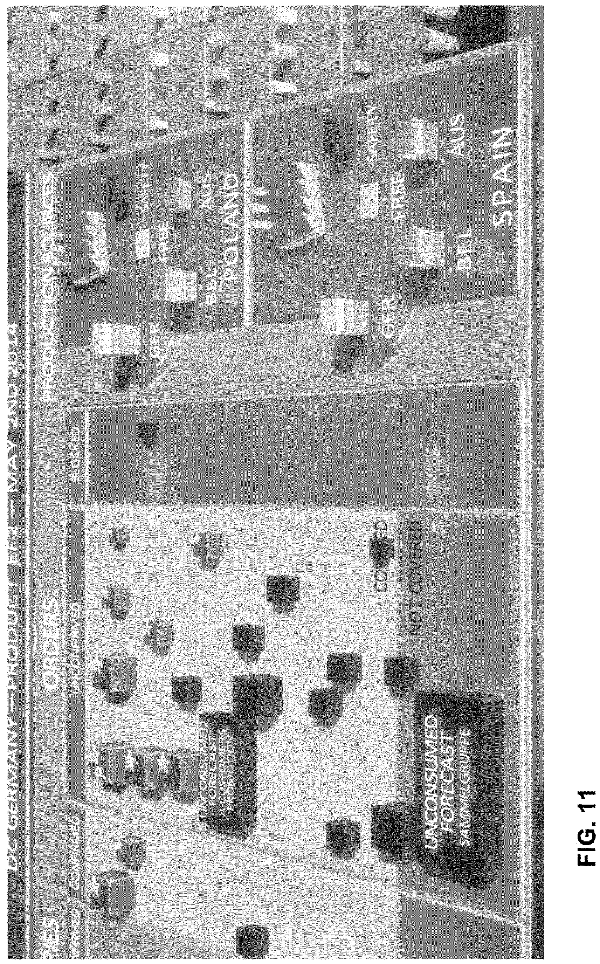

Figure 11 illustrates a delivery situation from the production plant to the distribution center in a representation of a collaborative environment provided according to embodiments of the present disclosure. The user may be able to investigate the supply chain up to the production plant. For each plant the different transfers may be listed as stacked goods visualizing the amount of goods. In addition other stock can be displayed too, like free stock or a safety stock that remains in the plant.

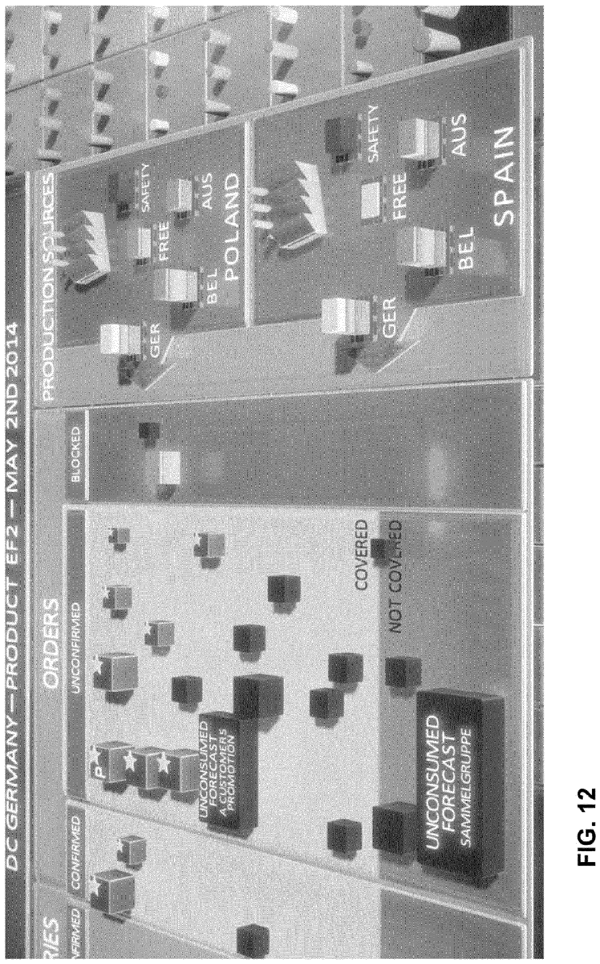

Figure 12 shows a redistribution of stock in a representation of a collaborative environment provided according to embodiments of the present disclosure. As shown, the stock can be redistributed by dragging boxes to a different location, e.g. in the collaborative environment the user may drag "free stock" from Poland to open orders of DC (distribution center) in Germany or another country.

Some portions of the detailed description have been presented in terms of algorithms and/or symbolic representations of operations on data bits within a computer memory. These algorithmic descriptions and/or representations are the means employed by those skilled in the art to most effectively describe processes to other equally skilled. An algorithm is here, generally, conceived to be a self-consistent sequence of acts leading to a desired result. The acts are those requiring physical manipulations of physical quantities, such as electrical and/or magnetic signals. Conveniently, these physical quantities and signals are referred to as bits, values, elements, symbols, characters, terms, numbers, or the like. Unless specifically stated otherwise, it is appreciated that throughout the disclosure, discussions utilizing terms such as processing, computing, determining and/or displaying, and the like, refer to processes of computer devices that manipulate and/or transform data represented as physical quantities within the computer devices.

While some embodiments have been described in detail, it is to be understood that the aspect of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A network-based system comprising:
a master server (104) providing access to a collaborative environment and configured to manage a first group (108a, ..., 108m) and a second group (110a, ..., 110k) of client devices, the first group of client devices (108a, ..., 108m) requesting a render service;
one or more processing devices (102) providing the render service configured to provide rendered representations of the collaborative environment to the first group of client devices (108a, ..., 108m); and
one or more databases (106a, ..., 106m) coupled to the one or more processing devices (102) and configured to provide data for the collaborative environment to be processed by the processing devices (102),
wherein the master server (104) is further configured to dynamically assign each client device of the first group (108a, ..., 108m) to a respective processing device (102) by sending a respective connection request of the client device of the first group (108a, ..., 108m) to the respective processing device (102) and as soon as the connection request is accepted, to instruct the respective processing device (102) to establish a direct connection between the respective processing device (102) and the client device to provide a rendered representation of the collaborative environment to the client device via the direct connection, wherein the master server (104) is further configured to directly provide data indicative of the collaborative environment to each client device of the second group (110a, ..., 110k) to be locally rendered on the client devices of the second group (110a, ..., 110k), and wherein responsive to a request from a client device of the first group (108a, ..., 108m) to leave a render service of the assigned processing device (102), the client device of the first group (108a, ..., 108m) is redirected back to the master server (104) and re-grouped into the second group (110a, ..., 110k) in order to directly receive the data indicative of the collaborative environment for local rendering.

2. The system according to claim 1, wherein, for each client device of the first group (108a, ..., 108m), the representation is individually rendered by the respective processing device (102).

3. The system according to claim 1 or 2, wherein the master server (104) further provides a communication interface interconnecting at least some of the client devices of the first (108a, ..., 108m) and second groups (110a, ..., 110k),

4. The system according to one of the preceding claims, wherein the master server (104) is further configured to manage access to selected data of the one or more databases (106a, ..., 106m) based on permissions and/or rights of the client devices (108a, ..., 108m, 110a, ..., 110k),

5. The system according to one of the preceding claims, wherein at least one representation of the collaborative environment includes a timeline representing a development of a plurality of items over time.

6. The system according to one of the preceding claims, further comprising at least one supervisor component configured to monitor operating conditions of the one or more processing devices (102).

7. The system according to one of the preceding claims, wherein the processing devices (102) are configured to receive input data from respective client devices (108a, ..., 108m) via said direct connections, wherein the input data are indicative of an update of the data of the collaborative environment.

8. The system according to claim 7, wherein the updated data of the collaborative environment is stored in a temporary storage according to one or more versions and the processing devices (102) are automatically redirected to at least one version of the updated data.

9. The system according to one of the preceding claims, wherein the master server (104) is further configured to manage the client devices (108a, ..., 108m, 110a, ..., 110k) in response to control commands received from the one or more client devices (108a, ..., 108m, 110a, ..., 110k), the control commands including a request for a render service received from a client device of the second group (110a, ..., 110k),

10. The system according to one of the preceding claims, wherein the render service and/or the client devices of the second group include a real-time graphics engine configured to generate a rendered representation of the collaborative environment.

11. The system according to one of the preceding claims, wherein the rendered output includes a rendered video stream reflecting the representation of the collaborative environment, wherein the rendered video stream is variably encoded based on an available bandwidth of the direct connection.

12. A computer-implemented method for providing access to a collaborative environment, comprising:
managing, by a master server, a first group and a second group of client devices, the first group of client devices requesting a render service;
providing, by one or more processing devices, the render service configured to provide rendered representations of the collaborative environment to the first group of client devices;
providing data for the collaborative environment from one or more databases coupled to the one or more processing devices, said data to be processed by the processing devices;
dynamically assigning, by the master server, each client device of the first group to a respective processing device by sending a respective connection request of the client device of the first group to the respective processing device and as soon as the connection request is accepted, instructing the respective processing device to establish a direct connection between the respective processing device and the client device to provide a rendered representation of the collaborative environment to the client device via the direct connection; and
directly providing, by the master, data indicative of the collaborative environment to each client device of the second group to be locally rendered on the client devices of the second group,
wherein responsive to a request from a client device of the first group to leave a render service of the assigned processing device, the client device of the first group is redirected back to the master server and re-grouped into the second group in order to directly receive the data indicative of the collaborative environment for local rendering.

13. The method according to claim 12, further comprising providing a communication interface interconnecting at least some of the client devices of the first and second groups.

14. The method according to claim 12 or 13, further comprising registering multiple client devices as participants of a video conference.

15. A computer-readable medium having instructions stored thereon, wherein said instructions, in response to execution by a computing device, cause said computing device to automatically perform a method according to one of the claims 12 to 14.

## Patentansprüche

1. Netzwerkbasiertes System, das Folgendes umfasst:
einen Master-Server (104), der Zugriff auf eine Kollaborationsumgebung bereitstellt und eingerichtet ist, eine erste Gruppe (108a, ....., 108m) und eine zweite Gruppe (110a, ...., 110k) von Client-Vorrichtungen zu verwalten, wobei die erste Gruppe von Client-Vorrichtungen (108a, ...., 108m) einen Render-Dienst anfordert;
eine oder mehrere Verarbeitungsvorrichtungen (102), die den Render-Dienst bereitstellen, der eingerichtet ist, der ersten Gruppe von Client-Vorrichtungen (108a, ...., 108m) gerenderte Darstellungen der Kollaborationsumgebung bereitzustellen; und
eine oder mehrere Datenbanken (106a, ....., 106m), die an die eine oder die mehreren Verarbeitungsvorrichtungen (102) gekoppelt und eingerichtet sind, Daten für die Kollaborationsumgebung bereitzustellen, die von den Verarbeitungsvorrichtungen (102) verarbeitet werden sollen,
wobei der Master-Server (104) ferner eingerichtet ist, jede Client-Vorrichtung der ersten Gruppe (108a, ...., 108m) dynamisch einer entsprechenden Verarbeitungsvorrichtung (102) zuzuordnen, durch Senden einer entsprechenden Verbindungsanforderung der Client-Vorrichtung der ersten Gruppe (108a, ...., 108m) an die entsprechende Verarbeitungsvorrichtung (102), und sobald die Verbindungsanforderung akzeptiert ist, die entsprechende Verarbeitungsvorrichtung (102) anzuweisen, eine direkte Verbindung zwischen der entsprechenden Verarbeitungsvorrichtung (102) und der Client-Vorrichtung herzustellen, um über die direkte Verbindung eine gerenderte Darstellung der Kollaborationsumgebung an die Client-Vorrichtung bereitzustellen, wobei der Master-Server (104) ferner eingerichtet ist, jeder Client-Vorrichtung der zweiten Gruppe (110a, ...., 110k) direkt Daten bereitzustellen, die die Kollaborationsumgebung angeben, die lokal auf den Client-Vorrichtungen der zweiten Gruppe (110a, ...., 110k) gerendert werden sollen, und wobei als Reaktion auf eine Anforderung von einer Client-Vorrichtung der ersten Gruppe (108a, ...., 108m), einen Render-Dienst der zugeordneten Verarbeitungsvorrichtung (102) zu verlassen, die Client-Vorrichtung der ersten Gruppe (108a, ...., 108m) zurück zum Master-Server (104) umgeleitet und in die zweite Gruppe (110a, ...., 110k) umgruppiert wird, um die Daten, die die Kollaborationsumgebung angeben, für lokales Rendern direkt zu empfangen.

2. System nach Anspruch 1, wobei für jede Client-Vorrichtung der ersten Gruppe (108a, ...., 108m) die Darstellung individuell durch die entsprechende Verarbeitungsvorrichtung (102) gerendert wird.

3. System nach Anspruch 1 oder 2, wobei der Master-Server (104) ferner eine Kommunikationsschnittstelle bereitstellt, die mindestens einige der Client-Vorrichtungen der ersten (108a, ...., 108m) und zweiten Gruppe (110a, ...., 110k) zwischenverbindet.

4. System nach einem der vorhergehenden Ansprüche, wobei der Master-Server (104) ferner eingerichtet ist, Zugriff auf ausgewählte Daten der einen oder mehreren Datenbanken (106a, ...., 106m) basierend auf Berechtigungen und/oder Rechten der Client-Vorrichtungen (108a, ...., 108m, 110a, ...., 110k) zu verwalten.

5. System nach einem der vorhergehenden Ansprüche, wobei mindestens eine Darstellung der Kollaborationsumgebung eine Zeitleiste aufweist, die eine Entwicklung einer Vielzahl von Elementen über die Zeit darstellt.

6. System nach einem der vorhergehenden Ansprüche, das ferner mindestens eine Überwachungskomponente umfasst, die eingerichtet ist, die Betriebsbedingungen der einen oder mehreren Verarbeitungsvorrichtungen (102) zu überwachen.

7. System nach einem der vorhergehenden Ansprüche, wobei die Verarbeitungsvorrichtungen (102) eingerichtet sind, Eingabedaten von entsprechenden Client-Vorrichtungen (108a, ....., 108m) über die direkten Verbindungen zu empfangen, wobei die Eingabedaten eine Aktualisierung der Daten der Kollaborationsumgebung angeben.

8. System nach Anspruch 7, wobei die aktualisierten Daten der Kollaborationsumgebung in einem temporären Speicher gemäß einer oder mehreren Versionen gespeichert sind und die Verarbeitungsvorrichtungen (102) automatisch auf mindestens eine Version der aktualisierten Daten umgeleitet werden.

9. System nach einem der vorhergehenden Ansprüche, wobei der Master-Server (104) ferner eingerichtet ist, die Client-Vorrichtungen (108a, ...., 108m, 110a, ...., 110k) als Reaktion auf Steuerbefehle zu verwalten, die von einer oder mehreren Client-Vorrichtungen (108a, ...., 108m, 110a, ...., 110k) empfangen werden, wobei die Steuerbefehle eine Anforderung für einen Render-Dienst umfassen, der von einer Client-Vorrichtung der zweiten Gruppe (110a, ...., 110k) empfangen wurde.

10. System nach einem der vorhergehenden Ansprüche, wobei der Render-Dienst und/oder die Client-Vorrichtungen der zweiten Gruppe eine Echtzeit-Grafik-Engine aufweisen, die eingerichtet ist, eine gerenderte Darstellung der Kollaborationsumgebung zu erzeugen.

11. System nach einem der vorhergehenden Ansprüche, wobei die gerenderte Ausgabe einen gerenderten Videostrom aufweist, der die Darstellung der Kollaborationsumgebung widerspiegelt, wobei der gerenderte Videostrom basierend auf einer verfügbaren Bandbreite der direkten Verbindung variabel kodiert wird.

12. Computerimplementiertes Verfahren zum Bereitstellen von Zugriff auf eine Kollaborationsumgebung, das folgende Schritte umfasst:
Verwalten, durch einen Master-Server, einer ersten Gruppe und einer zweiten Gruppe von Client-Vorrichtungen, wobei die erste Gruppe von Client-Vorrichtungen einen Render-Dienst anfordert;
Bereitstellen, durch eine oder mehrere Verarbeitungsvorrichtungen, des Render-Dienstes, der eingerichtet ist, der ersten Gruppe von Client-Vorrichtungen gerenderte Darstellungen der Kollaborationsumgebung bereitzustellen;
Bereitstellen von Daten für die Kollaborationsumgebung aus einer oder mehreren Datenbanken, die an die eine oder die mehreren Verarbeitungsvorrichtungen gekoppelt sind, wobei die Daten von den Verarbeitungsvorrichtungen verarbeitet werden sollen;
dynamisches Zuordnen, durch den Master-Server, jeder Client-Vorrichtung der ersten Gruppe zu einer entsprechenden Verarbeitungsvorrichtung durch Senden einer entsprechenden Verbindungsanforderung der Client-Vorrichtung der ersten Gruppe an die entsprechende Verarbeitungsvorrichtung und, sobald die Verbindungsanforderung akzeptiert ist, Anweisen der entsprechenden Verarbeitungsvorrichtung, eine direkte Verbindung zwischen der entsprechenden Verarbeitungsvorrichtung und der Client-Vorrichtung herzustellen, um über die direkte Verbindung eine gerenderte Darstellung der Kollaborationsumgebung an die Client-Vorrichtung bereitzustellen; und
direktes Bereitstellen, durch den Master, von Daten, die die Kollaborationsumgebung angeben, an jede Client-Vorrichtung der zweiten Gruppe, die lokal auf den Client-Vorrichtungen der zweiten Gruppe gerendert werden sollen,
wobei als Reaktion auf eine Anforderung von einer Client-Vorrichtung der ersten Gruppe, einen Render-Dienst der zugeordneten Verarbeitungsvorrichtung zu verlassen, die Client-Vorrichtung der ersten Gruppe zurück zum Master-Server umgeleitet und in die zweite Gruppe umgruppiert wird, um die Daten, die die Kollaborationsumgebung angeben, für lokales Rendern direkt zu empfangen.

13. Verfahren nach Anspruch 12, das ferner ein Bereitstellen einer Kommunikationsschnittstelle umfasst, die mindestens einige der Client-Vorrichtungen der ersten und zweiten Gruppe zwischenverbindet.

14. Verfahren nach Anspruch 12 oder 13, das ferner ein Registrieren mehrerer Client-Vorrichtungen als Teilnehmer einer Videokonferenz umfasst.

15. Computerlesbares Medium mit darauf gespeicherten Befehlen, wobei die Befehle als Reaktion auf eine Ausführung durch eine Rechenvorrichtung bewirken, dass die Rechenvorrichtung automatisch ein Verfahren nach einem der Ansprüche 12 bis 14 durchführt.

## Revendications

1. Système basé sur un réseau comprenant :
un serveur maître (104) donnant accès à un environnement collaboratif et configuré de manière à gérer un premier groupe (108a, ..., 108m) et un second groupe (110a, ..., 110k) de dispositifs clients, le premier groupe de dispositifs clients (108a, ..., 108m) demandant un service de rendu ;
un ou plusieurs dispositifs de traitement (102) fournissant le service de rendu configuré de manière à fournir des représentations rendues de l'environnement collaboratif au premier groupe de dispositifs clients (108a, ..., 108m) ; et
une ou plusieurs bases de données (106a, ..., 106m) couplées audit un ou auxdits plusieurs dispositifs de traitement (102) et configurées de manière à fournir des données pour l'environnement collaboratif devant être traitées par les dispositifs de traitement (102) ;
dans lequel le serveur maître (104) est en outre configuré de manière à affecter dynamiquement chaque dispositif client du premier groupe (108a, ..., 108m) à un dispositif de traitement respectif (102), en envoyant une demande de connexion respective du dispositif client du premier groupe (108a, ..., 108m) au dispositif de traitement respectif (102), et dès que la demande de connexion est acceptée, à donner instruction au dispositif de traitement respectif (102) d'établir une connexion directe entre le dispositif de traitement respectif (102) et le dispositif client en vue de fournir une représentation rendue de l'environnement collaboratif au dispositif client par l'intermédiaire de la connexion directe, dans lequel le serveur maître (104) est en outre configuré de manière à fournir directement des données indicatives de l'environnement collaboratif à chaque dispositif client du second groupe (110a, ..., 110k), à rendre localement sur les dispositifs clients du second groupe (110a, ..., 110k), et dans lequel, en réponse à une demande provenant d'un dispositif client du premier groupe (108a, ..., 108m), pour quitter un service de rendu du dispositif de traitement affecté (102), le dispositif client du premier groupe (108a, ..., 108m) est redirigé vers le serveur maître (104) et est replacé dans le second groupe (110a, ..., 110k) afin de recevoir directement les données indicatives de l'environnement collaboratif à des fins de rendu local.

2. Système selon la revendication 1, dans lequel, pour chaque dispositif client du premier groupe (108a, ..., 108m), la représentation est rendue individuellement par le dispositif de traitement respectif (102).

3. Système selon la revendication 1 ou 2, dans lequel le serveur maître (104) fournit en outre une interface de communication interconnectant au moins certains des dispositifs clients du premier groupe (108a, ..., 108m) et du second groupe (110a, ..., 110k).

4. Système selon l'une quelconque des revendications précédentes, dans lequel le serveur maître (104) est en outre configuré de manière à gérer l'accès à des données sélectionnées de ladite une ou desdites plusieurs bases de données (106a, ..., 106m) sur la base d'autorisations et/ou de droits des dispositifs clients (108a, ..., 108m, 110a, ..., 110k).

5. Système selon l'une quelconque des revendications précédentes, dans lequel au moins une représentation de l'environnement collaboratif inclut une frise chronologique représentant un développement d'une pluralité d'éléments au fil du temps.

6. Système selon l'une quelconque des revendications précédentes, comprenant en outre au moins un composant de supervision configuré de manière à surveiller des états de fonctionnement dudit un ou desdits plusieurs dispositifs de traitement (102).

7. Système selon l'une quelconque des revendications précédentes, dans lequel les dispositifs de traitement (102) sont configurés de manière à recevoir des données d'entrée en provenance de dispositifs clients respectifs (108a, ..., 108m) par l'intermédiaire desdites connexions directes, les données d'entrée indiquant une mise à jour des données de l'environnement collaboratif.

8. Système selon la revendication 7, dans lequel les données mises à jour de l'environnement collaboratif sont stockées dans une mémoire temporaire selon une ou plusieurs versions, et les dispositifs de traitement (102) sont automatiquement réorientés vers au moins une version des données mises à jour.

9. Système selon l'une quelconque des revendications précédentes, dans lequel le serveur maître (104) est en outre configuré de manière à gérer les dispositifs clients (108a, ..., 108m, 110a, ..., 110k) en réponse à des instructions de commande reçues en provenance dudit un ou desdits plusieurs dispositifs clients (108a, ..., 108m, 110a, ..., 110k), les instructions de commande incluant une demande pour un service de rendu reçue en provenance d'un dispositif client du second groupe (110a, ..., 110k).

10. Système selon l'une quelconque des revendications précédentes, dans lequel le service de rendu et/ou les dispositifs clients du second groupe incluent un moteur graphique en temps réel configuré de manière à générer une représentation rendue de l'environnement collaboratif.

11. Système selon l'une quelconque des revendications précédentes, dans lequel la sortie rendue inclut un flux vidéo rendu reflétant la représentation de l'environnement collaboratif, dans lequel le flux vidéo rendu est codé de manière variable sur la base d'une largeur de bande disponible de la connexion directe.

12. Procédé, mis en oeuvre par ordinateur, de fourniture d'un accès à un environnement collaboratif, comprenant les étapes ci-dessous consistant à :
gérer, par le biais d'un serveur maître, un premier groupe et un second groupe de dispositifs clients, le premier groupe de dispositifs clients demandant un service de rendu ;
fournir, par le biais d'un ou plusieurs dispositifs de traitement, le service de rendu, configuré de manière à fournir des représentations rendues de l'environnement collaboratif au premier groupe de dispositifs clients ; et
fournir des données pour l'environnement collaboratif à partir d'une ou plusieurs bases de données couplées audit un ou auxdits plusieurs dispositifs de traitement, lesdites données devant être traitées par les dispositifs de traitement ;
affecter dynamiquement, par le biais du serveur maître, chaque dispositif client du premier groupe à un dispositif de traitement respectif, en envoyant une demande de connexion respective du dispositif client du premier groupe au dispositif de traitement respectif, et dès que la demande de connexion est acceptée, donner instruction au dispositif de traitement respectif d'établir une connexion directe entre le dispositif de traitement respectif et le dispositif client en vue de fournir une représentation rendue de l'environnement collaboratif au dispositif client par l'intermédiaire de la connexion directe ; et
fournir directement, par le biais du serveur maître, des données indicatives de l'environnement collaboratif à chaque dispositif client du second groupe à rendre localement sur les dispositifs clients du second groupe ;
dans lequel, en réponse à une demande provenant d'un dispositif client du premier groupe pour quitter un service de rendu du dispositif de traitement affecté, le dispositif client du premier groupe est redirigé vers le serveur maître et est replacé dans le second groupe afin de recevoir directement les données indicatives de l'environnement collaboratif à des fins de rendu local.

13. Procédé selon la revendication 12, comprenant en outre l'étape consistant à fournir une interface de communication interconnectant au moins certains des dispositifs clients du premier groupe et du second groupe.

14. Procédé selon la revendication 12 ou 13, comprenant en outre l'étape consistant à enregistrer de multiples dispositifs clients en tant que des participants à une vidéoconférence.

15. Support lisible par ordinateur sur lequel sont stockées des instructions, dans lequel lesdites instructions, en réponse à leur exécution par un dispositif informatique, amènent ledit dispositif informatique à mettre en oeuvre automatiquement un procédé selon l'une des revendications 12 à 14.
